# EUROPEAN PATENT APPLICATION

(11) **EP 2 693 355 A1**
(43) Date of publication of application: **05.02.2014**
(21) Application number: 11862072.3
(22) Date of filing: 08.12.2011
(51) Int. Cl.: G06F 21/00

(54) **SECURITY-LEVEL VISUALIZATION DEVICE**

(30) Priority: 31.03.2011 JP 2011079869
(71) Applicant: Hitachi, Ltd., Tokyo 100-8280 (JP)
(72) Inventor: SHIGEMOTO Tomohiro, Tokyo 100-8280 (JP); NAKAKOJI Hirofumi, Tokyo 100-8280 (JP); KITO Tetsuro, Tokyo 100-8280 (JP); UMEKI Hisashi, Tokyo 100-8280 (JP); TAKEMOTO Satoshi, Tokyo 100-8280 (JP); KAJI Tadashi, Tokyo 100-8280 (JP); KAI Satoshi, Tokyo 100-8280 (JP)
(74) Representative: Moore, Graeme Patrick
(86) International application number: PCT/JP2011/078493
(87) International publication number: WO 2012/132124

(57) **Abstract**

A security level of each service is calculated and visualized. The device includes a security level calculation unit and a security level visualization unit. The security level calculation unit receives information regarding security of the service from a plurality of sensors as observation information, and calculates a security level of each service based on the received observation information and a security level calculation policy. The security level visualization unit outputs the security level of each service, based on the security level calculated by the security level calculation unit and configuration information of the service. Further, the security level calculation policy has a service, a user using the service, and an observation item to be observed in the service. The security level calculation unit calculates the security level in association with the user of the service and the service, based on the security level calculation policy.

## Description

### Technical Field

The present invention relates to a technique for calculating security levels of respective services and visualizing them, in a system with different services used by users.

### Background of the Invention

As a utilization form of a computer on the basis of the Internet, there is what is called cloud computing (hereinafter referred to as the cloud). This is a utilization form in which services provided by servers on the network are availably used without being conscious of the servers. In the conventional computer usage, a user keeps and manages the hardware, software, and data of a computer. On the other hand, in the cloud, the service provider providing services and having the server has and manages the hardware, software, and data. The user uses the cloud, thereby obtaining benefits and suppressing the purchasing expense of a computer resulting in freedom from trouble of system management.

Services provided on the cloud can be divided into three of SaaS (Software as a Service), PaaS (Platform as a Service), IaaS (Infrastructure as a Service). The SaaS is a utilization form that is made available as a service just enough necessary software (function) via a network, and PaaS is another utilization form for providing a platform as a base for building and operating the software through a network. IaaS is a utilization form for providing the hardware (base) for building and operating a computer system as a service through a network.

The providing of the services using the cloud has progressed, and thus becoming the base infrastructure to support the people's lives and socio-economic activities.

In the cloud, the configuration of services or units (server, network, storage, and the like) included in the system may dynamically be change, and the cloud users cannot understand the physical configuration of the system. As a result, it is difficult to understand the status of each unit. This is one of the factors that some people might hesitate to use the cloud and that some people might intend not to deposit very important data in the cloud.

Plural kinds of users use the cloud. The plural kids of users include SaaS providers providing services using the units in the cloud, SaaS users using the services provided by the SaaS providers.

For those users to securely and safely use the services or units included in the system, it is important to establish a monitoring technology to understand the situation in real time by collecting and analyzing information regarding the units included in the system or security of the services.

For example, Japanese Unexamined Patent Application Publication No. 2008-176634 discloses a security level monitoring evaluation device, which calculates a security level SL for the elapsed time of each security function in the information system and calculates a security level SLG of the entire information system by adding the security level SLs over the entire security functions. Japanese Unexamined Patent Application Publication No. 2005-250803 describes a business support system for evaluating the security level of the customer system and proposing security related products suitable for the evaluation result or services to the customer.

A plurality of users are present in the cloud, different security policies, different units included in the system, and different services are used by the users. Thus, it is necessary to calculate the security levels of the services used by the users. The units included in the system and the services are dynamically changed. It is necessary to understand the security level in real time.

According to Japanese Unexamined Patent Application Publication No. 2008-176634, it is possible to understand the security level of each security function or the entire information system. However, the document does not suggest that the security level of each service be understood.

According to Japanese Unexamined Patent Application Publication No. 2005-250803, it is possible to understand the security level at the time the customer performs the periodic check. However, the document does not suggest that the security level be understood in real time.

Japanese Unexamined Patent Application Publication No. 2005-250803 suggests the technique on the assumption that one single customer (user) uses the system, and does not suggest a system in which a plurality of users are present.

### SUMMARY OF THE INVENTION

It is accordingly an object of the present invention to provide a system which can calculate and visualize a security level of each service in real time, in a system in which a plurality of users are present.

There is provided a security level visualization device including: a security level calculation unit which receives information regarding security of the services from a plurality of sensors, as observation information, and calculates a security level of each of the services based on the received observation information and a security level calculation policy held by the security level visualization device; and a security level visualization unit which outputs the security level of each of the services, based on the security level of each of the services which is calculated by the security level calculation unit and configuration information of the service which is held by the security level visualization device.

The security level calculation policy has the services, a user using the service, and an observation item to be observed in the service; and the security level calculation unit calculates the user of the service and the security level of each of the services, based on the security level calculation policy.

According to another aspect of the present invention, the security level calculation unit may store the observation information received from the plurality of sensors in association with the observation item.

According to still another aspect of the present invention, hierarchical structural information representing on what service the service is operating and connection configuration information representing to which service the service is connected are held as configuration information; and the security level visualization unit restores the hierarchical structural information between the services from the configuration information and the connection configuration information, and then outputs them together with the security level calculated by the security level calculation unit.

According to still yet another aspect of the present invention, the security level visualization unit outputs the security level calculated by the security level calculation unit and the observation information which is used when the security level calculation unit calculates the security level.

According to a further aspect of the present invention, the security level calculation unit stores the observation information received from the plurality of sensors; and the security level visualization unit displays the observation information received from the plurality of sensors.

According to the disclosed security level visualization device, it is possible to calculate and visualize the security level of each service in a system in which a plurality of users are present.

According to the disclosed security level visualization device, it is possible to check the configuration of a service that the user currently uses together with the security level of this service.

### BRIEF DESCRIPTION OF THE DRAWINGS

FIG. 1 is a diagram showing a network configuration example including a security level visualization device;
FIG. 2 is a diagram showing a configuration example of the security level visualization device of a first embodiment;
FIG. 3 is a diagram showing an example of configuration information;
FIG. 4 is a diagram showing an example of a security level calculation policy;
FIG. 5 is a diagram showing an example of observation information;
FIG. 6 is a diagram showing an example of observation information data;
FIG. 7 is a diagram showing examples of a security level visualization screen;
FIG. 8 is a diagram showing an example of a security level visualization screen;
FIG. 9 is a diagram showing an example of a security level calculation table;
FIG. 10 is a flowchart of a security level calculation process;
FIG. 11 is a flowchart of a security level visualization process;
FIG. 12 is a diagram showing a modification of the security level visualization process;
FIG. 13 is a diagram showing a configuration example of a security level visualization device of a second embodiment;
FIG. 14 is a diagram showing a security level template of the second embodiment;
FIG. 15 is a diagram showing an example of a security level calculation policy setting screen of the second embodiment;
FIG. 16 is a flowchart of a policy setting process of the second embodiment; and
FIG. 17 is a diagram showing the process scheme of the present invention.

### DESCRIPTION OF THE EMBODIMENTS

In a system where a plurality of users are present, there are different security policies, different system-constituting units, and different services, between the users. For example, a service provider that provides services using a unit on the cloud wishes to know the security level of units on the cloud or the security level of services provided by the provider. On the other hand, a service user that use the service of the service provider does not need to know the security level of the unit on the cloud, but wishes to know the security level of the provided service. In addition to the demands, a cloud provider providing the service provider with the units wishes to know the security level of the unit included in the data center managed by the cloud provider itself.

In other words, fascinating units or services are different between the users.

In this embodiment, security levels are calculated and visualized in association with the users, using security level calculation policies of the respective users. In the first embodiment, focusing on this point, descriptions will now be made of acquisition of observation data, calculation of the security level, and display of the security level.

In a second embodiment, descriptions will be made of setting of the security level calculation policy using a security level template.

### First embodiment

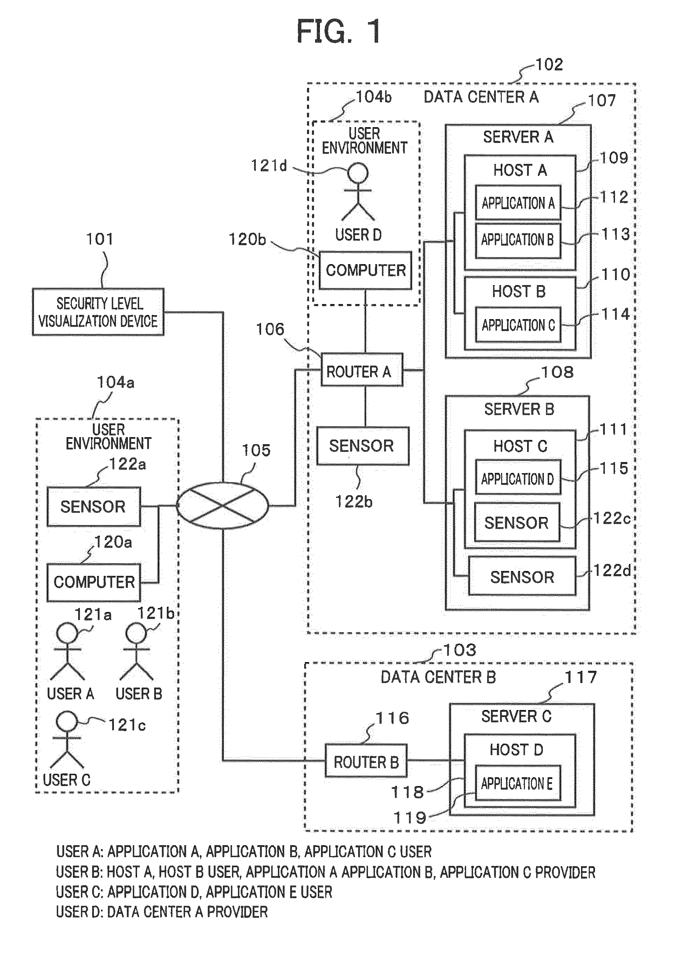

FIG. 1 shows a configuration example of a network including a security level visualization device which calculates and visualizes the security level in this embodiment.

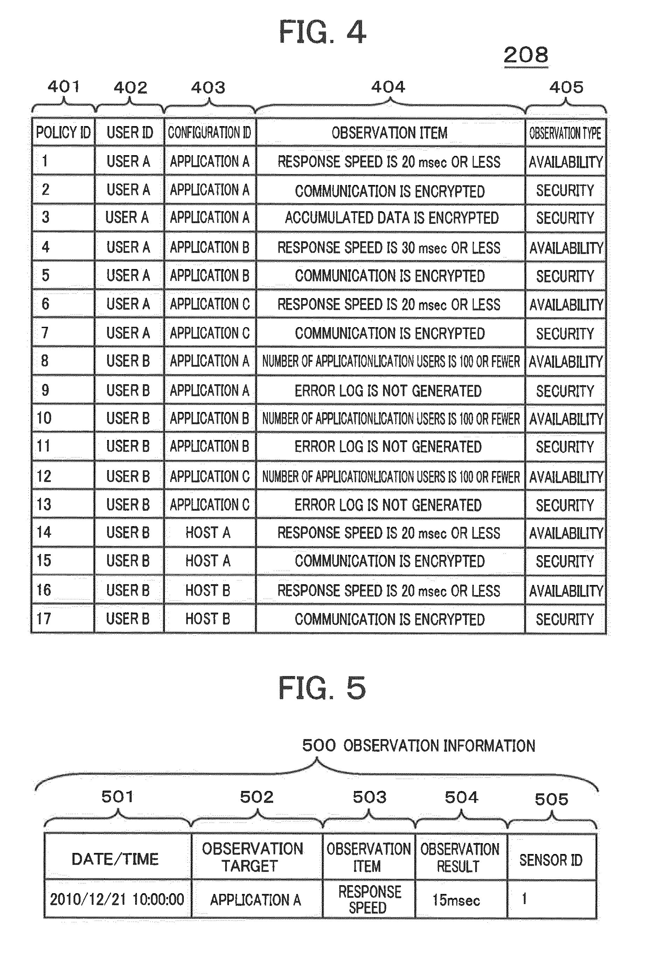

A security level visualization device 101 is connected to a data center "A" 102, a data center "B" 103, a user environment 104a through a network 105, and calculates and visualizes the security level of a unit and/or a service existing in the data center "A" 102 and/or the data center "B" 103. The contents of the security level calculation policy will later specifically be described using FIG. 4.

The network 105 is a communication network for connecting to a network, for example, the intranet or the Internet.

The data center A 102 includes a router A 106, a server A 107, a server B 108, a user environment 104b, and a center 122. A host A 109 and a host B 110 operate on the server A 107, while a host C 111 and a sensor 122d operate on the server B108. Further, an application A 112 and an application B 113 operate on the host A 109, an application C 114 operates on the host B 110, and an application D 115 and a sensor 122c operate on the host C 111.

The data center B103 includes a router B 116 and a server C 117. A host 118 operates on the server C 117. An application E 119 operates on the host D 118.

When there is no distinction to be made between 104a and 104b, a reference numeral 104 is used for identifying any of them. When there is no distinction to be made between 122a, 122b, 122c, and 122d, a reference numeral 122 is used for identifying any of them.

The "server" represents a computer in which a virtual technology (e.g., hypervisor) is equipped, while the "host" represents a virtual machine (virtual calculator) operating on the server. The "application" represents a program executed on the host, and provides various services.

The "sensor" represents an agent collecting information necessary for calculating the security level, and is installed in a data center or a user environment by the service provider (SaaS provider, PaaS provider, IaaS provider).

For example, a sensor 122a observing the response speed of the application A 112 is installed in the user environment 104a, and is periodically (e.g. every ten seconds) connected to the application A 112. Upon reception of a response from the application A 112, the sensor 122a observes the consumption time since the connection to the response, and transmits it as observation information to the security level visualization device 101. The observation information will more specifically be described using FIG. 5.

The sensor includes various sensors, such as a sensor observing the number of users, a sensor observing the traffic amount, a sensor observing the usage rate of a CPU, a memory, a disk, a sensor observing whether communication or accumulated data is encrypted, a sensor observing whether a patch is given, a sensor observing whether antivirus software is operating, a sensor observing whether the certificate is valid, and a sensor observing whether it is multi-tenant. The sensor 122 may be realized using an existing product.

An implementation method of the sensor 122 may be any of the sensors 122a and 122b composed of the hardware, the sensor 122d composed of a virtual machine, and the sensor 122c composed of the software.

For simple explanations, the descriptions have been made to the example in which the data center is composed of the router, the sensor, and the server. Other than this composition, the data center may include FW, IDS, a load balancer, etc. The data center A and the data center B may exist in geographically different places.

The user environment 104 is an environment composed of a computer 120 and a user 121. The user 121 operates the computer 120, and connects to the security level visualization device 101, the data center A 102, and the data center B 103.

A plurality of types of users 121 use the cloud. Examples of the users include the service provider providing services with the utilization of the units on the cloud, and the service user using the service of the service provider.

A user A 121a is a SaaS user that uses the application A 112, the application B 113, and the application C114. A user B 121b is a SaaS provider that provides the application A 112, the application B 113, and the application C 114, and is also a PaaS user that uses the host A 109 and the host B 110. A user C 121c is a SaaS user that uses the application D 115 and the application E 119, and a user D 121d is a PaaS and IaaS provider that manages the data center A 102. That is, the user D 121d provides the user B 121b with the host A 109 and the host B 110, and the user B 121b configures the application A 112 and the application B 113 on the provided host A 109 and the application C 114 on the host B 110, and provides the user A 121a with the applications as a service.

The computer 120 operated by the user 121 is illustrated simply as one unit, but may be prepared for each user.

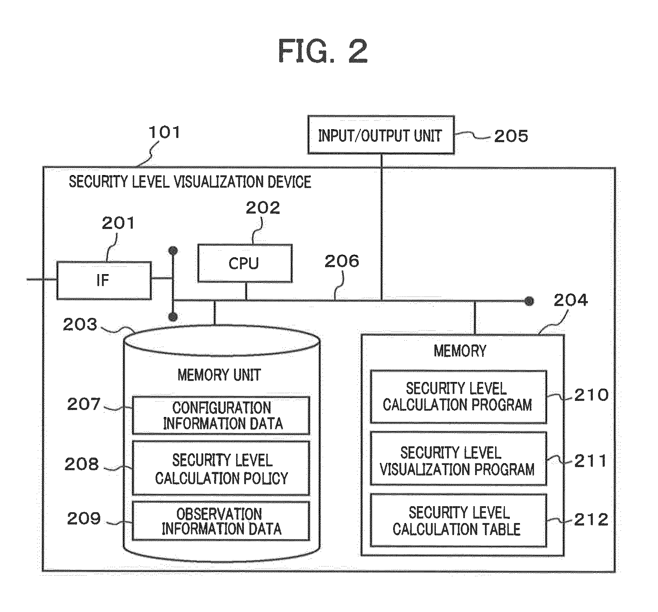

FIG. 2 shows a configuration example of the security level visualization device 101 which calculates and visualizes the security level of each service. The security level visualization device 101 is a computer which includes a CPU 202, a memory 204, a memory unit 203, an IF (interface) 201, an input/output unit 205 (keyboard, display, etc.), and a communication path (bus) 206. The memory 204 stores data necessary for the CPU 202 to execute processes. The memory unit 203 includes the hard disk or a flash memory, having the capacity for storing a large amount of data. The IF 201 is to communicate with another unit. The input/output unit 205 is to input/output information. The communication path 206 is to connect these units with each other.

The CPU 202 calculates the security level by executing a security level calculation program 210 stored in the memory 204, and visualizes the security level by executing a security level visualization program 211. The memory unit 203 stores configuration information data 207 for obtaining configuration information of units or services, a security level calculation policy 208 as a policy for calculating the security level, and observation information data 209 for recording an observation result transmitted by the sensor 122. The memory 204 stores a security level calculation table 212 for calculating the security level.

The above-described program or data may be stored in the memory 204 or the memory unit 203 in advance, and may be installed (loaded) from the input/output unit 205 or another unit through the IF 201, as needed.

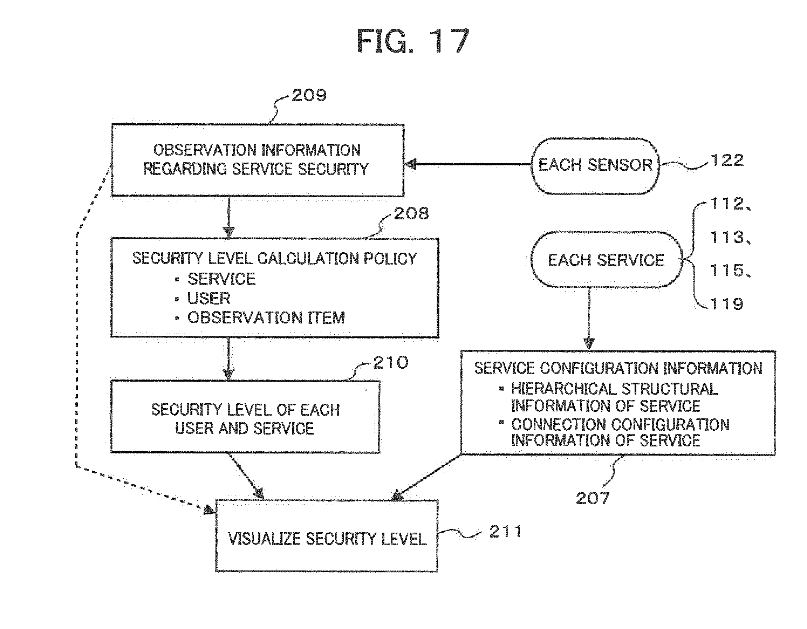

Descriptions will now be made of the process scheme of the present invention using FIG. 17.

The observation information 209 regarding the security level is received from the plurality of sensors 122. The security level of each service is calculated based on the received observation information and the security level calculation policy 208 kept by the security level visualization device (210). The security level of each service is visualized based on the security level calculated in association with each user and service and configuration information of the service acquired from each service (applications 112, 113, 115, 119) (211).

The security level calculation policy includes a service, a user using the service, and an observation item to be observed in the service, while the configuration information of the service includes hierarchical structural information representing on which service the corresponding service operates and connection configuration information representing to which service the corresponding service connects. In the case of the visualization 211, the observation information received from a plurality of sensors are displayed.

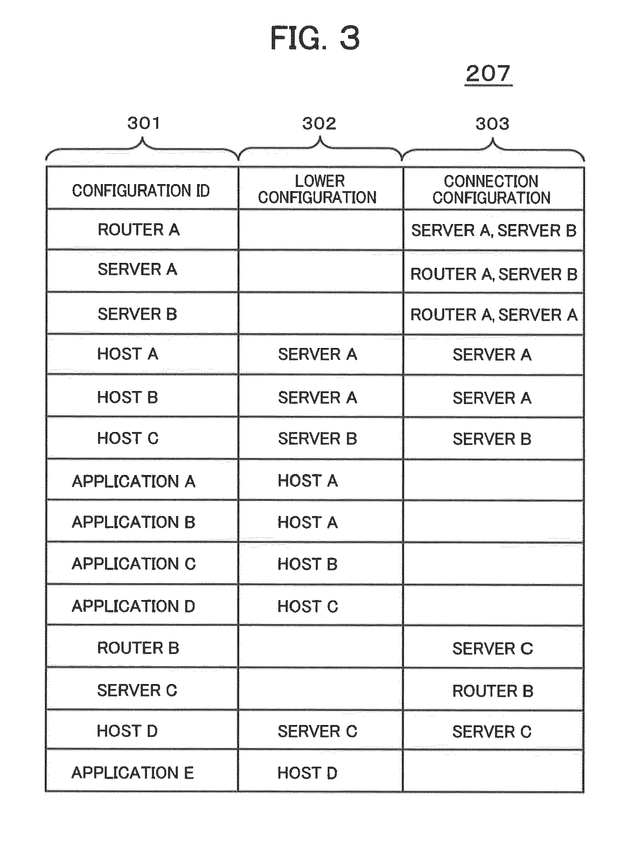

FIG. 3 is a diagram showing an example of the configuration information data 207. As illustrated in FIG. 3, the configuration information data 207 includes a configuration ID 301, a lower configuration 302, and a connection configuration 303. The configuration ID 301 represents information (identifier) for uniquely identifying the unit or service (router, server, host, and application) of the system. Note that the configuration ID 301 is information for uniquely identifying the unit or service, even when a plurality of data centers exist, and may include an ID of the data center.

The lower configuration 302 represents on which unit or service the operation is made. For example, the host A 109 in FIG. 1 operates on the server A 107. Thus, the lower configuration of the host A 109 is the server A 107.

A connection configuration 304 represents to which unit or service the connection is made. For example, the router A 106 in FIG. 1 is connected to the server A 107 and the server B 108. Thus, the connection configuration of the router A 106 includes the server A 107 and the server B 108.

The configuration information stored in the configuration information data 207 is input or updated by the service provider (SaaS provider, PaaS provider, IaaS provider), as needed. For example, as illustrated in FIG. 3, some configuration information is input by the user D 121d (PaaS and Iaas providers managing the data center A). In this case, the configuration information corresponds to some configuration IDs 301 "router A", "server A", "server B", "host A", "host B", and "host C". The configuration information whose configuration IDs 301 are "application A", "application B", and "application C" are input by the user B 121b (SaaS provider that provides the application A, the application B, the application C).

Any of the services whose configuration information is intended to be kept away from the service user may not be stored in the configuration information data 207, or may have auxiliary data (flag) attached thereto to reject the access from the service user.

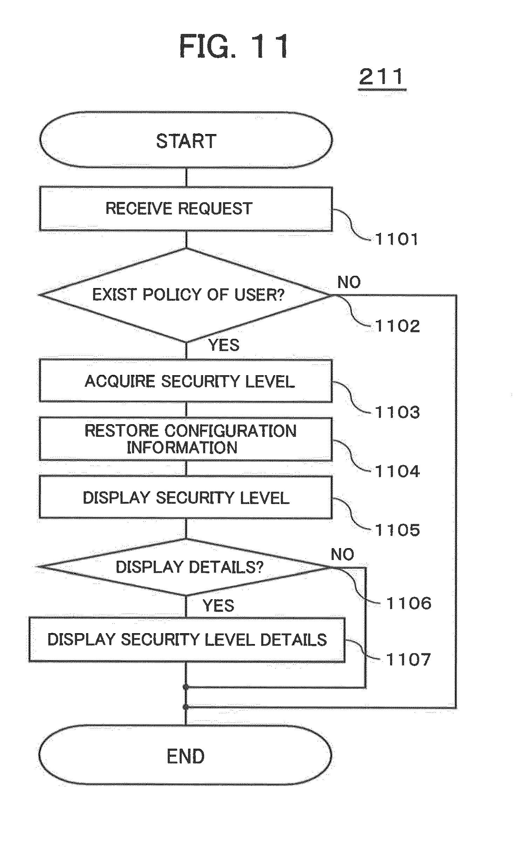

The configuration information data 207 is used when the security level visualization program 211 executed by the CPU 202 displays a screen. The process of the security level visualization program 211 will more specifically be described later using FIG. 11.

The lower configuration 302 may be a higher configuration representing which unit or service is operating. In this case, in FIG. 1, the application A 112 and the application B 113 operate on the host A 109. Thus, the higher configuration of the host A 109 includes the application A 112 and the application B 113. FIG. 4 is a diagram showing an example of the security level calculation policy 208. As illustrated in FIG. 4, the security level calculation policy 208 includes a policy ID 401, a user ID 402, a configuration ID 403, an observation item 404, and an observation type 405. The policy ID 401 represents information (identifier) for uniquely identifying the security level calculation policy.

The user ID 402 represents information (identifier) for uniquely identifying the user 121.

The configuration ID 403 represents information (identifier) for uniquely identifying the unit or service (router, server, host, and application) of the system, and is associated with the same information (identifier) as the configuration ID 403 of the configuration information date 207.

The observation item 404 represents what item to be observed. For example, observation items include "response speed is a threshold value", "number of users is a threshold value or lower", "traffic amount is a threshold value or lower", "CPU utilization is a threshold value or lower", "memory usage is a threshold value or lower", "disk usage is a threshold value or lower", "communication is being encrypted", "accumulated data is encrypted", "patch is assigned", "antivirus software is operating", "certificate is valied", and "it is multi-tenant".

The observation type 405 represents on what aspect (standard) the observation item 404 is observed. For example, the observation type may represent "security", "availability", etc.

The security level calculation policy stored in the security level calculation policy 208 is input or updated by the service provider (SaaS provider, PaaS provider, IaaS provider), as needed. For example, those security level calculation policies (corresponding to the policy IDs 401 "1" to "7" illustrated in FIG. 4) are input by the user B 121b (SaaS provider that provides the application A, the application B, and the application C). Those security level calculation policies (corresponding to the policy IDs 401 "8" to "17") are input by the user D 121d (PaaS and IaaS provider that manages the data center A).

The security level represents how much security level is ensured (guaranteed) by the service provider, for a service provided to the service user using its service. The observation items may differ from each other depending on the contract between the service provider and each of the service users. Therefore, it is necessary to determine the security level calculation policy in association with each service provider.

The security level of the service is calculated and visualized in real time, based on the security level calculation policy 208. The service user checks the visualized security level, thereby enabling to understand whether the service provided by the service provider has an appropriate security level.

The descriptions will now be made specifically using FIG. 4. For example, if the user B 121b makes a contract "response speed of application A is 20 msec or less, and communication and accumulated data are encrypted" with the user A 121a, the security level calculation policies with the policy IDs 401 "1", "2", and "3" are registered.

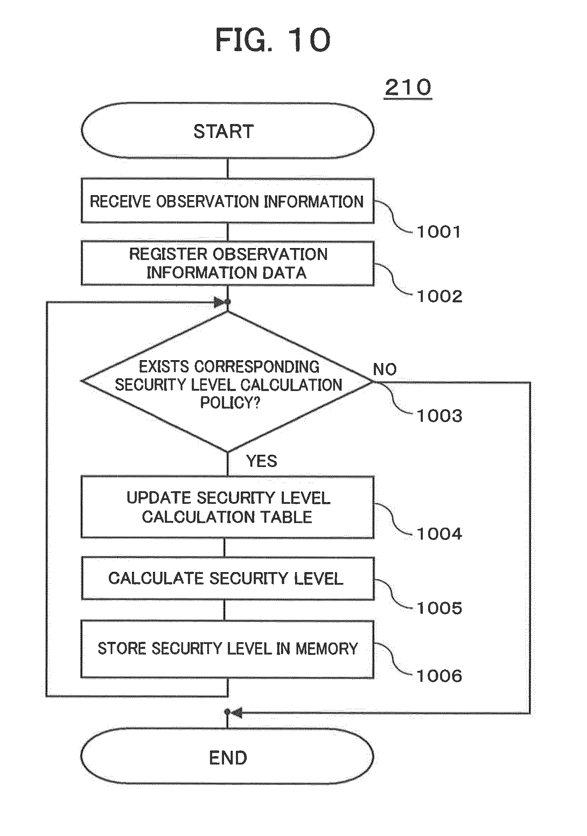

The security level calculation policy 208 is used when calculating the security level of each service, by the security level calculation program 210 executed by the CPU 202. The process of the security level calculation program 210 will specifically be described using FIG. 10.

When a new user 121 uses the system, a security level calculation policy for the new user 121 is added to the security level calculation policy 208. When the user 121 does not use the system, the security level calculation policy regarding this user is deleted from the security level calculation policy 208. Further, when the configuration of the service used by the user is changed, the security level calculation policy 208 is updated.

FIG. 5 is a diagram showing one example of observation information 500 which is transmitted by the sensor to the security level visualization device 101. As illustrated in FIG. 5, the observation information includes items of "date/time" 501, an observation target" 502, an "observation item" 503, an "observation result" 504, and a "sensor ID" 505. The date/time 501 represents the observation date/time in which the sensor 122 performs the observation.

The observation target 502 represents which unit/service is a target to be observed, and represents the same information as the configuration ID 301 of the configuration information data 207.

The observation item 503 represents what item is being observed, while the observation result 504 represents the observation result of the observation item 503.

The sensor ID 505 represents information (identifier) for uniquely identifying the sensor 122.

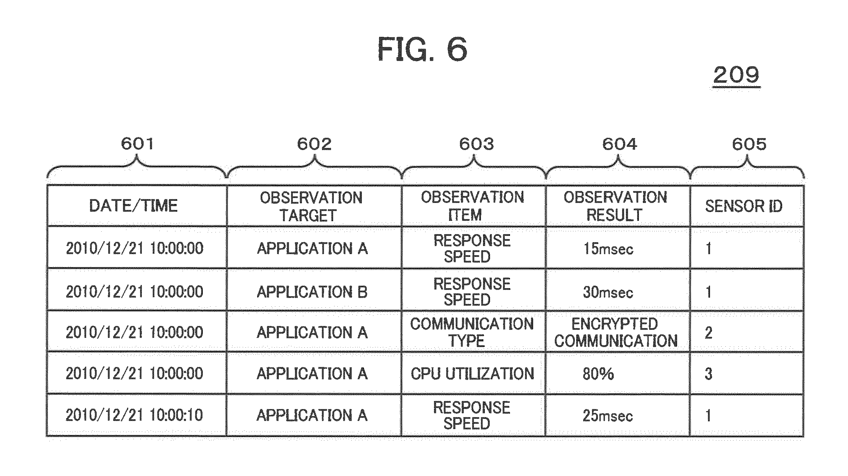

FIG. 6 is a diagram showing an example of the observation information data 209. As illustrated in FIG. 6, the observation information data 209 includes items of "date/time" 601, an "observation target" 602, an "observation item" 603, an "observation result" 604, and a "sensor ID" 605. The observation information data 209 is the stored data of the observation information 500 received from the sensor. The date/time 601 has the date/time 501 of the observation information 500, the observation target 602 stores the observation target 502 of the observation information 500, the observation item 603 stores the observation item 503 of the observation information 500, the observation result 604 stores the observation result 504 of the observation information 500, and the sensor ID 605 stores the sensor ID 505 of the observation information 500.

The observation information data 209 is used when the security level visualization program 211 executed by the CPU 202 displays a screen. The process of the security level visualization program 211 will specifically be described using FIG. 11.

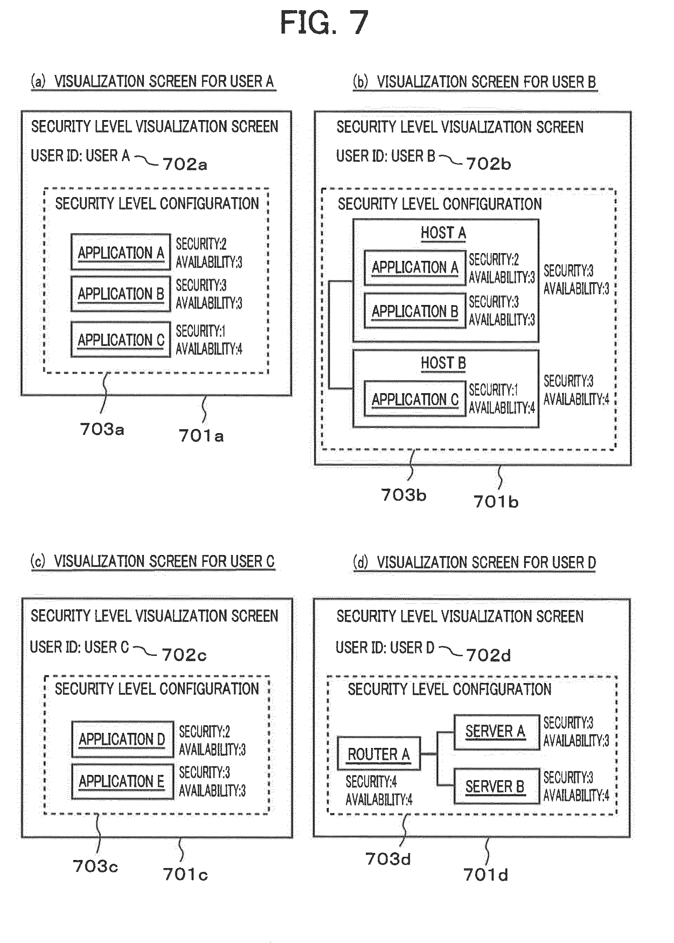

FIGS. 7A to 7D show an example of a security level visualization screen. As illustrated in FIGS. 7A to 7D, a security level visualization screen 701 includes an area 702 for displaying a user ID and an area 703 for displaying the configuration information and the security level. The area 702 for displaying the user ID represents a user ID corresponding to the visualized security level. The area 703 for displaying the configuration information and the security level represents a target observation service for the user displayed in the area 702 for displaying the user ID and a security level of this service. The screen 701a is a security level visualization screen for the user A 121a, the screen 701b is a screen for the user B 121b, the screen 701c is a screen for the user C 121c, and the screen 701d is a screen for the user D 121d. The visualization screen 701 has different screen configurations depending on the users, and displays the security level of the unit and service that the users are interested in.

For example, the user B 121b is a service user of the host A 109 and the host B 110, and is a service provider of the application A 112, the application B 113, and the application C 114. Thus, the screen displays the security level of the host A 109, the host B 110, the application A 112, the application B 113, and the application C 114. The application A 112 and the application B 113 operate on the host A 109, while the application C 114 operates on the host B 110. As displayed in the visualization screen 701b, the security levels of the application A 112 and the application B 113 are visualized in the host A 109, and the security level of the application C 114 is visualized in the host A 109.

In this manner, the security levels are visualized. together with the configuration information, thereby enabling to easily understand the dependence of the security levels. For example, when the availability level of the application A 112 is decreased, if the availability level of the host A 109 is decreased as well, the decrease in the availability level of the application A 112 results from the decrease in the availability level of the host A 109. Thus, the availability level of the application A 112 can be improved by taking countermeasures for the host A 109.

The security level calculation program 210 executed by the CPU 202 calculates the security level for each service. The process of the security level calculation program 210 will specifically be described later using FIG. 10.

The security level visualization program 211 executed by the CPU 202 displays the visualization screen 701 based on the configuration information data 207. The process of the security level visualization program 211 will specifically be described later using FIG. 11.

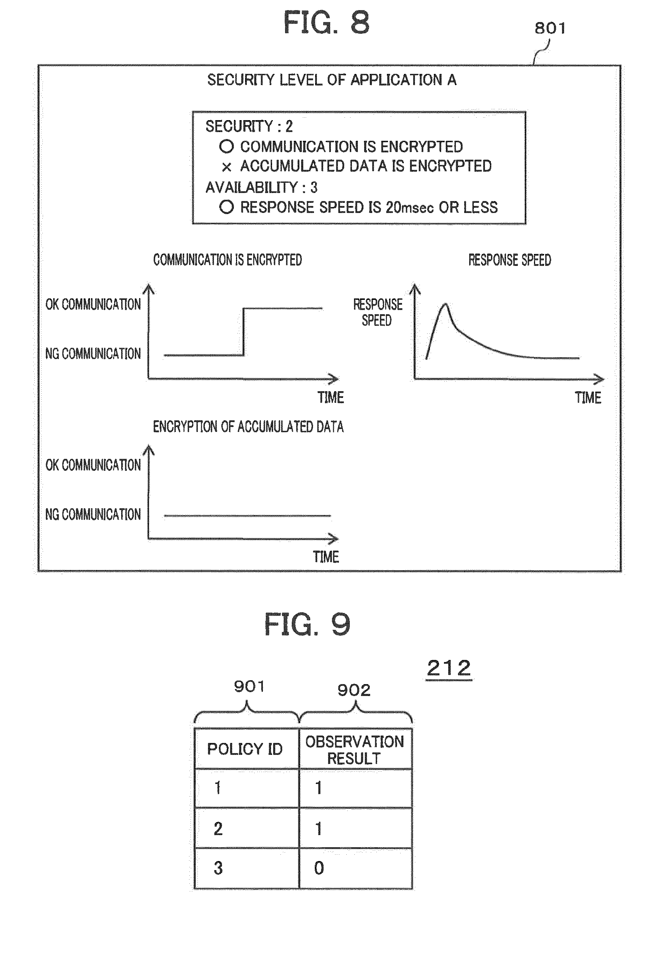

FIG. 8 shows an example of the security level visualization screen. The visualization screen 801 is a screen for displaying the grounds of calculating the security levels. Information of the present observation result 604 and the time series variation of the observation result 604 are displayed using the observation information data 209.

For example, the reasons why the security level of the application A 112 is "2" are "communication is encrypted" and "accumulated data is not encrypted". The reason of the security level "3" is "response speed is 20 msec or less". The visualization screen 801 is displayed by clicking on the area "application A" on the visualization screen 701a.

FIG. 9 is a diagram showing one example of the security level calculation table 212. As illustrated in FIG. 9, the security level calculation table 212 includes items of a "policy ID" 901 and an "observation result" 902. The policy ID 901 represents the policy 401 of the security level calculation policy 208.

The observation result 902 represents whether the observation result 504 of the observation information 500 satisfies the observation item 404 of the security level calculation policy 208. When the observation result satisfies the observation item, "1" is stored. When the result does not satisfy the observation item, "0" is stored.

The security level calculation program 210 executed by the CPU 202 updates the security level calculation table. The process of the security level calculation program 210 will specifically be described later using FIG. 10.

Descriptions will now be made of a process (hereinafter referred to as a security level calculation process), in which the security level calculation program 210 of the security level visualization device 101 receives the observation information 500 and calculates the security level. FIG. 10 is a flowchart of the security level calculation process 210.

As illustrated in FIG. 10, the security level calculation program 210 executing the security level calculation process is executed by the CPU 202, receives the observation information 500 through the IF 201 (Step 1001), and stores the received observation information in the observation information data 209 (Step 1002).

The security level calculation program 210 proceeds to Step 1004, when the observation target 502 and the observation item 503 of the received observation information 500 correspond to the configuration ID 403 and the observation item 404 of the security level calculation policy 208. The program 210 ends the process, when there is no corresponding security level calculation policy 208 (Step 1003).

The security level calculation program 210 stores the policy ID 401 and the observation result of the security level calculation policy to which the received observation information 500 correspond, in the security level calculation table 212 (Step 1004).

The flow of the security level calculation process from Step 1001 to Step 1004 will now be described using some specific example. For example, when the observation information 500 (the date/time 501 is 2010/12/21 10:00:00, the observation target 502 is "application A", the observation item 503 is "response speed", the observation result 504 is "15 msec", the sensor ID 505 is "1") is received, the security level calculation program 210 compares this corresponding observation information 500 with the configuration ID 403 and the observation item 404 of the security level calculation policy 208. In this case, this observation information 500 corresponds to the configuration ID 403 "application A" and the observation item 404 "response speed is 20 msec or less", corresponding to the policy ID 401 "1". The security level calculation program 210 checks whether the observation result 504 of the observation information 500 satisfies the observation item 404. In this case, the observation result "15 msec" of the observation information 500 satisfies the observation item 404 "response speed is 20 msec or less" corresponding to the policy ID 401 "1". Thus, "1" is stored in the policy ID 901, and "1" is stored in the observation result 902, in the security level calculation table 212.

The security level calculation program 210 calculates the security level for each service corresponding to the updated policy ID 901, using the security level calculation policy 208 and the security level calculation table 212 (Step 1005). Calculation of the security level is performed using functions that are set in advance for the user ID 402, the configuration ID 403, and the observation type 405 of the security level calculation policy 208. For example, the function to be used is "(sum total of the observation results 902 corresponding to the policy IDs 401 of the same user ID 402, the same configuration ID 403, and the same observation type 405)/(total number of policy IDs 401 corresponding to the same user ID 402, the same configuration ID 403, and the same observation type 405)×4". Note that the multiplication by 4 is performed in order to keep the security level in a range from 0 to 4. In the above-described function, the security level has an integer value, by rounding off the value obtained by the above-described calculation.

For example, when the security level calculation table 212 corresponding to the policy ID 901 "1" is updated in Step 1004, the total number of policy ID 401 corresponding to the user ID 402, the configuration ID 403, and the observation type 405 whose policy ID 401 of the security calculation policy 208 is "1" is checked. In this case, the user ID 402 is "user A", the configuration ID 403 is "application A", the observation type 405 is "availability". The only security calculation policy 208 corresponding to these items is the security level calculation policy whose policy ID 401 is "1". Thus, the total number of the policy IDs 401 corresponding to the same user ID 402, the same configuration ID 403 and the same observation type 405 is "1". At this time, the sum total of the observation results 902 corresponding to the same user ID 402, the same configuration ID 403, and the same observation type 405 is also "1". The security level of "availability of application A for User A" is 1/1×4=4.

Descriptions will now be made to the case in which the security level calculation table 212 whose policy ID 901 is "3" is updated in Step 1004. Also in this case, the user ID 402 whose policy ID 401 of the security level calculation policy 208 is "3" is "user A", the configuration ID 403 is "application A", and the observation type 405 is "security". The security level calculation policies 208 corresponding to these items include the security level calculation policy with the policy ID 401 "2" and the security level calculation policy with the policy ID 401 "3". Thus, the total number of the policy IDs 401 corresponding to the same user ID 402, the same configuration ID 403, and the same observation type 405 is "2". At this time, the sum total of the observation results 902 corresponding to the policy IDs 401 corresponding to the same user ID 402, the same configuration ID 403, and the same observation type 405 is "1". Thus, the security level "security of application A for user A" is 1/2×4=2.

The security level calculation program 210 stores the calculated security level in the memory 204, and returns to the procedure 1003 (Step 1006).

Subsequently, descriptions will now be made to process (hereinafter referred to as a visualization process), in which the security level visualization program 211 of the security level visualization device 101 receives a user request, and visualizes the security level of each service. FIG. 11 is a flowchart of the visualization process 211.

As illustrated in FIG. 11, the security level visualization program 211 executing the visualization process is executed by the CPU 202, and receives a visualization request from the user through the IF 201 or the input unit 205 (Step 1101). The request from the user includes a user ID identifying at least the user.

The security level visualization program 211 compares the user ID included in the user request with the user ID 402 of the security level calculation policy 208. If there exists the user ID 402, the flow proceeds to Step 1103. If there does not exist the corresponding user ID 402, the visualization process ends (Step 1102).

The security level visualization program 211 acquires the security level of each of the configuration ID 403 and the observation type 405 of the user ID 402 corresponding to the received request, from the memory 20 (Step 1103). For example, when a visualization request is received from a user whose user ID is "user B", ten kinds of security levels are acquired from the memory 204. The ten kinds of security levels include "availability of application A for user B", "security of application A for user B", "availability of application B for user B", "security of application B for user B", "availability of application C for user B", "security of application C for user B", "availability of host A for user B", "security of host A for user B", "availability of host B for user B", and "security of host B for user B".

The security level visualization program 211 acquires configuration information (the lower configuration 302 and the connection configuration 303) of the configuration ID 403 of the user ID 402 corresponding to the received request, from the configuration data 207 (Step 1104). For example, when a visualization request is received from a user whose user ID is "user B", the configuration information ID 403 includes "application A", "application B", "application C", "host A", "host B". These pieces of configuration information are acquired from the configuration information data 207. At this time, the lower configuration 302 whose configuration ID 301 is "application A" is "host A", the lower configuration 302 whose configuration ID 301 is "application B" is "host A", and the lower configuration 302 whose configuration ID 301 is "application C" is "host B". The connection configuration 303 whose configuration ID 301 is "host A" is "server A", and the connection configuration 303 whose configuration ID 301 is "host B" is also "server A". Therefore, it is clear that "host A" and "host B" have the connection relationship.

The security level visualization program 211 outputs the security level acquired in Step 1103 and the configuration information acquired in Step 1104, to an input/output unit of another unit through a network or to the input/output unit 205 (Step 1105). For example, when a visualization request is received from a user whose user ID is "user B", the "host A" and the "host B" are connected using a line representing the connection based on the configuration information acquired in Step 4. In addition, the "application A" and the "application B" are displayed inside the "host A", while the "application C" is displayed inside the "host B". Further, the security level acquired in Step 1103 is displayed. Through these procedures, the visualization screen shown in the screen 701 is displayed.

Upon clicking on the display area of the configuration ID 403 of the visualization screen 701, the security level visualization program 211 proceeds to Step 1107. On the contrary, the program ends the visualization process, if the display area is not clicked on (Step 1106).

The security level visualization program 211 extracts a user ID 402 corresponding to the received request and a policy ID 401 of a security level calculation policy corresponding to the clicked configuration ID 403, and outputs the observation result 902 corresponding to the policy ID 401 from the security level calculation table 212 to an input/output unit of another device through a network or the input unit 205. Further, the program acquires the past observation information from the observation information data 207, outputs the time-series variation, and ends the visualization process (Step 1107).

Accordingly, in the security level visualization device which calculates and visualizes the security level of the system, the security level calculation program 210 of the security level visualization device 101 stores the observation information 500 received through the IF 201 in the observation information data 207, calculates a security level in accordance with the security level calculation policy 208. Further, the security level visualization program 211 receives a user request, and outputs a security level visualization screen based on the security level calculation policy 208 and the configuration information data 207, thereby enabling to display the fascinating security levels in association with the users.

This embodiment may be partially changed and implemented as follows. In Step 1005 of the security level calculation program 210, the security level is calculated using functions that are set in advance, for each of the user IDs 402 and the observation types 405 of the security level calculation policies 208. In Step 1103 of the security level visualization program 211, the security level of each of the user ID 402 and the observation type 405 corresponding to the received request is acquired from the memory 204. For example, in the calculation of the security level, a formula to be used is "(sum total of the observation results 902 corresponding to the policy IDs 401 of the same user ID 402 and the same observation type 405)/(total number of policy IDs 401 corresponding to the user IDs 402 and the same observation type 405)x4". This enables to omit the acquisition (Step 1104) of the configuration information. Further, it is possible to understand the security level throughout the entire services to be used (provided to) by the users.

The security level visualization device 101 is provided inside the data center A 102 and the data center B 103. With this configuration, the observation information acquired by observing inside the data center does not flow out of the data center, thus reducing the risk of leakage of the observation information.

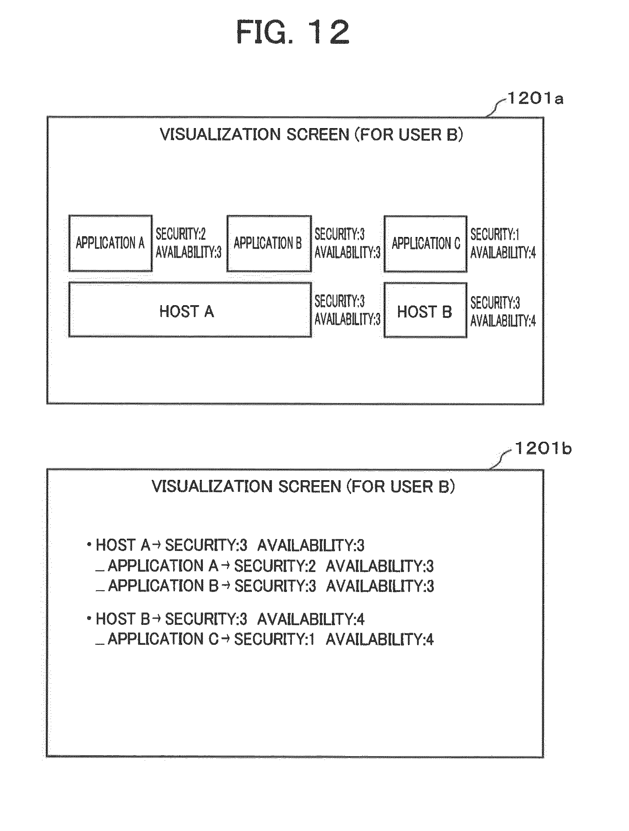

As illustrated in FIG. 12, the visualization screen 701 is displayed like the visualization screen 1201a or the visualization screen 1201b. The visualization screen 1201a can be displayed using only the information of the lower configuration 302. As a result, it is possible to reduce the load for restoring the connection relationship of the connection configuration 303. The visualization screen 1201b is displayed in the form of text. This results in reducing the load for the display.

The security level calculation policy 208 may be set by the service user. For example, if the user A 121a updates the security level calculation policy 208 for the user A 121a as set by the user B 121b, and security level calculation policy 208 with the policy IDs 401 "4" to "7" is deleted, the user A 121a can know only the security level regarding the "application A". As a result, it is possible to reduce the load for calculating the security level of the security level calculation program 210.

### Second embodiment

This embodiment includes the security level visualization device of the first embodiment, and is a security level visualization device for executing the setting of the security level calculation policy, using a security level template.

In the first embodiment, the service provider sets the security level calculation policy 208. That is, what security level calculation 208 is set is left to the service provider, thus increasing the load on the service provider. The setting of the security level calculation policy 208 may require specialized knowledge regarding the security.

In the second embodiment, descriptions will now be made to the security level visualization device having a template of the security level calculation policy. By using this security level template, it is possible to reduce the load on the service provider for setting the security level calculation policy 208 and to check the security level in accordance with the unified standard.

Examples of the templates of the security level calculation policy are "PCI DSS (Payment Card Industry Data Security Standard)", "Checklist of cloud service lever", and the like. The PCI DSS is the security standard used in the credit industry for protecting the credit card information and credit transactions. The checklist of the cloud service level is a checklist created by the Ministry of Economy, Trade and Industry, to ensure appropriate business relations for using the cloud and realizing effective usage.

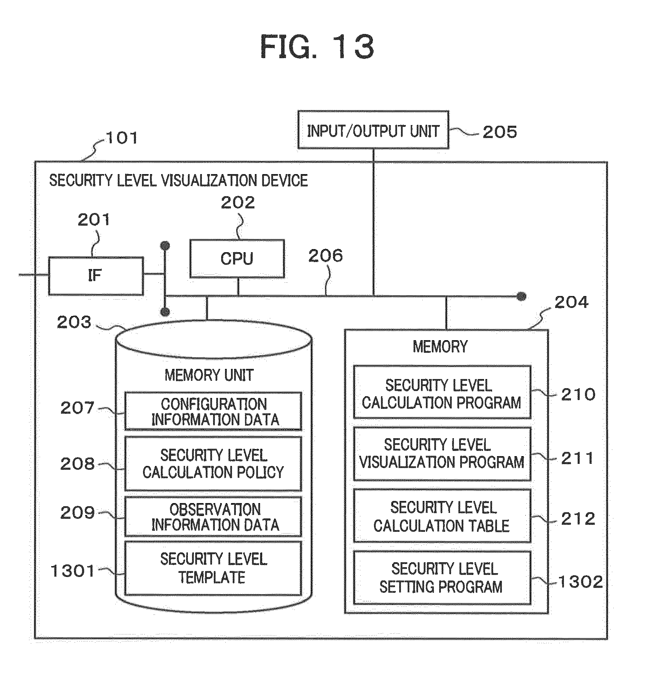

FIG. 13 is a configuration diagram showing an example of a security level visualization device 101 in this embodiment. The same constituent elements as those of the first embodiment are identified by the same reference numerals, and thus will not repeatedly be explained again. Hereinafter, only different points from the first embodiment will mainly be explained.

As described in FIG. 13, the security level visualization device 101 in the second embodiment is configured with the security level visualization device 101 of the above-described first embodiment, together with a security level template 1301 and a security level setting program 1302.

The CPU 202 sets a security level calculation policy 208 by executing the security level setting program 1302 stored in the memory 204. The memory unit 203 stores the security level template 1301 for setting the security level calculation policy 208.

Each of the above-described programs or data may be stored in the memory 204 or the memory unit 203 in advance, or may be installed (loaded) from the input/output unit 205 or another device through the IF 201 when needed.

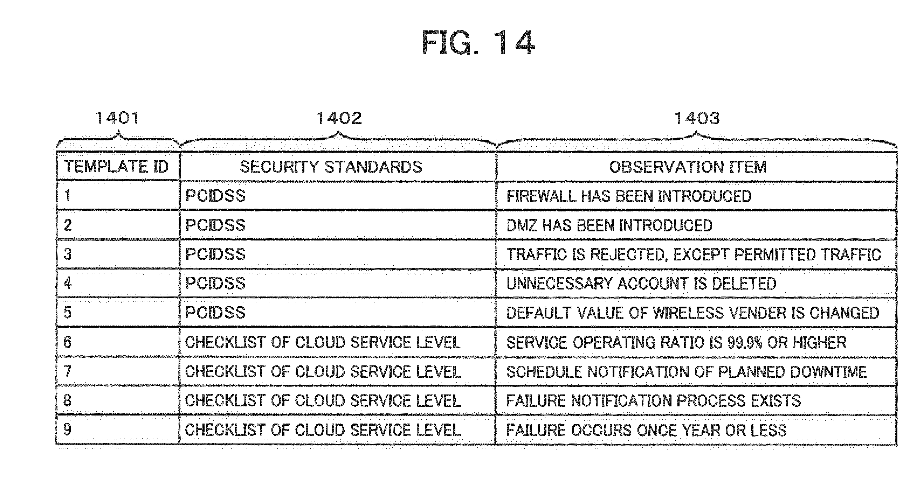

FIG. 14 is a diagram showing an example of the security level template 1301. As illustrated in FIG. 14, the security level template 1301 includes a template ID 1401, a security standard 1402, and an observation item 1403. The template ID 1401 represents information (identifier) for uniquely identifying the security level template. The security standard 1402 represents in accordance with what security standard the security level template is formed. Examples of the stored standards are the "PCI DSS", the "checklist of cloud service level", and the like. The observation item 1403 represents an item that must be observed, in order to check the requirements prescribed in the security standard 1402.

For example, in order to satisfy the security standard "PIC DSS", an item to be set in the observation item 1403 may be any of "firewall has been introduced", "DMZ has been introduced", "traffic is rejected except those permitted", "unnecessary account is deleted", and "default value of wireless vendor is changed".

Those observation items 1403 are preferably items to be observed by the sensor as the observation information 500. However, of the requirements, same observation information 500 (e.g. a contact process at failure exists) cannot be acquired by the sensor. For such a requirement, no observation item 1403 may be set, or the observation information 500 may periodically be input by the service provider or the service provider, using an interface, such as the WEB.

Other than the described security standard, it is possible to prepare the observation item used in the contract between the service provider and the service user in advance, as a security template.

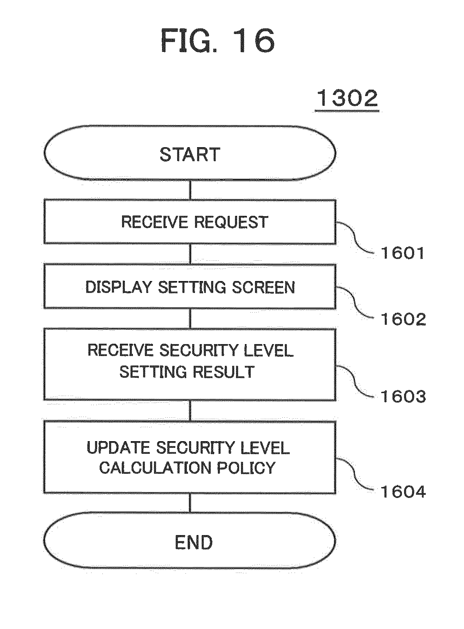

The security level template 1301 is used when the security level setting program 1302 executed by the CPU 202 sets a security level calculation policy 208. A process of the security level setting program 1302 will specifically be described later using FIG. 16.

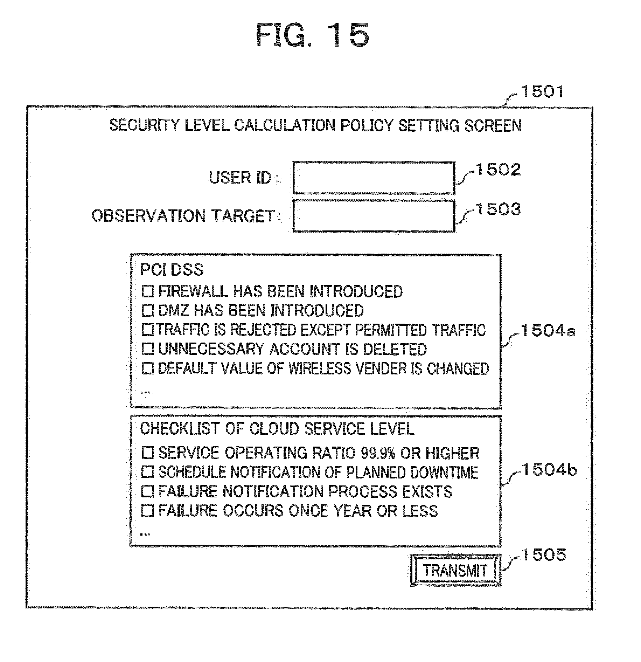

FIG. 15 shows an example of a security level calculation policy setting screen. As illustrated in FIG. 15, the security level calculation policy setting screen 1501 includes a form 1502 for inputting a user ID, a form 1503 for inputting an observation target, a form 1504 for selecting a security level template, and a form 1505 for transmitting an input result. The form 1501 for inputting the user ID shows to which user ID a security policy to be set corresponds. The form 1503 for inputting the observation target shows to which observation target a security policy to be set corresponds. The form 1504 for selecting the security level template shows which security policy is selected, and shows the security standard 1402 of the security level template 1301 and the observation item 1403. The form 1505 for transmitting the input result is provided for transmitting input or selected information to the security level setting program 1302.

The security level calculation policy setting screen 1501 is output by the security level setting program 1302 executed by the CPU 202. A process of the security level setting program 1302 will specifically be described later using FIG. 16.

Descriptions will now be made to a process (hereinafter referred to as a policy setting process), in which the security level setting program 1302 of the security level visualization device 101 receives a user request and sets the security level calculation policy 208. FIG. 16 is a flowchart of the policy setting process.

As illustrated in FIG. 16, the security level setting program 1302 for executing the policy setting process is executed by the CPU 202, receives a request of a user setting the security level calculation policy 208 through the IF 201 or from the input/output unit 205 (Step 1601), and outputs the security level calculation policy setting screen 1501 to an input/output unit of another device through a network or to the input/output unit 205 (Step 1602).

After the user performs inputting of the security level calculation policy setting screen 1501 and transmits an input result, the security level setting program 1302 receives the input result through the IF 201 or from the input/output unit 205 (Step 1603).

The security level setting program 1302 analyzes the received input result, stores information input in the form 1502 for inputting the user ID in the user ID 402, information input in the form 1503 for inputting the observation target in the configuration ID 403, and also information selected in the form 1504 for selecting the security level template in the observation item 404 and the observation type 405, and ends this process (Step 1604).

Accordingly, in the second embodiment, the security level visualization device 101 sets the security level calculation policy 208 based on the input result of the security level calculation policy setting screen 1501 which is received through the IF 201 or by the input/output unit 205, thereby reducing the load on the user setting the security level calculation policy. It is possible to calculate security level in accordance with the unified security standard.

According to the above-described security level visualization device, in a system with different services used by different users, the security levels are calculated in association with the services, and can be visualized.

The present invention is not limited to the above-described embodiments as they are. The present invention may be embodied by modifying the constituent elements without departing from the spirit of the invention. It is possible by appropriate combinations of the elements disclosed in the above embodiments, to form various inventions. For example, it is possible to delete some constituent elements from all the elements shown in the embodiments. Further, the constituent elements over different embodiments may appropriately be combined together.

### Explanation of references

- 101 :: security level visualization device
- 102 :: data center "A"
- 103 :: data center "B"
- 104 :: user environment
- 105 :: network
- 207 :: configuration information data
- 208 :: security level calculation policy
- 209 :: observation information data
- 210 :: security level calculation program
- 211 :: security level visualization program
- 212 :: security level calculation
- 701 :: visualization screen
- 1301 :: security level template
- 1302 :: security level setting program
- 1501 :: security level calculation policy setting screen.

## Claims

1. A security level visualization device which calculates and visualizes a security level of a system including a plurality of services, the device comprising:
a security level calculation unit which receives information regarding security of the services from a plurality of sensors, as observation information, and calculates a security level of each of the services based on the received observation information and a security level calculation policy held by the security level visualization device; and
a security level visualization unit which outputs the security level of each of the services, based on the security level of each of the services which is calculated by the security level calculation unit and configuration information of the service which is held by the security level visualization device.

2. The security level visualization device according to claim 1,
wherein the security level calculation policy has the services, a user using the service, and an observation item to be observed in the service; and
the security level calculation unit calculates the user of the service and the security level of each of the services, based on the security level calculation policy.

3. The security level visualization device according to claim 1, wherein the security level calculation unit stores the observation information received from the plurality of sensors in association with the observation item.

4. The security level visualization device according to claim 1,
wherein the configuration information has hierarchical structural information representing on what service the service is operating and connection configuration information representing to which service the service is connected; and
the security level visualization unit restores and visualizes the hierarchical structural information between the services from the configuration information and the connection configuration information.

5. The security level visualization device according to claim 1, wherein the security level visualization unit outputs the security level calculated by the security level calculation unit together with the configuration information.

6. The security level visualization device according to claim 1, wherein the security level visualization unit outputs the security level calculated by the security level calculation unit together with the observation information which is used when the security level calculation unit calculates the security level.

7. The security level visualization device according to claim 1,
wherein the security level calculation unit stores the observation information received from the plurality of sensors; and
the security level visualization unit displays the observation information received from the plurality of sensors.

8. The security level visualization device according to claim 1, further comprising:
a security level setting template; and
a security level setting unit,
for setting the security level calculation policy.

9. The security level visualization device according to claim 8, wherein the security level setting unit outputs a security level setting screen for the user to input the security level calculation policy.

10. A security level visualization method in a processor which is connected to one or more servers each of which performs a plurality of services and one or more user calculators for using each of the services through a network and calculates and visualizes a security level of a system including the plurality of services, the method comprising the steps of:
receiving information regarding security of each of the services from a sensor provided in each of the servers, as observation information;
calculating the security level of each of the services, based on the received observation information and a security level calculation policy held by the processor;
outputting the security level of each of the services, based on the calculated security level of the service and configuration information of the service which is held by the processor; and
transmitting the security level of each of the services to the user calculator.

11. The security level visualization method according to claim 10,
wherein the security level calculation policy has the service, a user using the service, and an observation item to be observed in the service; and
the security level is calculated in association with the user of the service and the service, based on the security level calculation policy, when calculating the security level.

12. The security level visualization method according to claim 10, wherein the observation information received from the plurality of sensors is stored in association with the observation item, when calculating the security level.

13. The security level visualization method according to claim 10,
wherein the configuration information has hierarchical structural information representing on what service the service is operating and connection configuration information representing to which service the service is connected; and
based on the configuration information, the hierarchical structural information between the services and the connection configuration information are restored and visualized, when visualizing the security level.

14. The security level visualization method according to claim 10, wherein the security level calculated in the step of calculating the security level is output together with the configuration information, when visualizing the security level.

15. The security level visualization method according to claim 10, wherein the security level calculated in the step of calculating the security level is output together with the observation information used when calculating the security level in the step of calculating the security level, when visualizing the security level.

16. The security level visualization method according to claim 10, further comprising the steps of:
storing the observation information received from the plurality of sensors, when calculating the security level; and
displaying the observation information received from the plurality of sensors, when visualizing the security level.

17. The security level visualization method according to claim 10, wherein a security level setting template and a security level setting process are set, for setting the security level calculation policy.

18. The security level visualization method according to claim 17, wherein a security level setting screen for the user to input the security level calculation policy is output, when setting the security level.
